# DEMANDE DE BREVET EUROPEEN

(11) **EP 4 338 945 A1**
(43) Date de publication de la demande: **20.03.2024**
(21) Numéro de dépôt: 23194168.3
(22) Date de dépôt: 30.08.2023
(51) Int. Cl.: B32B 1/00, B32B 3/08, B32B 5/02, B32B 5/08, B32B 5/24, B32B 5/26, B32B 27/12, B32B 27/32

(54) **PIÈCE DE PANNEAUX DE GARNITURE POUR HABITACLE DE VÉHICULE**

(30) Priorité: 13.09.2022 FR 2209153
(71) Demandeur: SMRC Automotive Holdings Netherlands B.V., 1101 BA Amsterdam (NL)
(72) Inventeur: BONY, Claire, 59128 FLERS-EN-ESCREBIEUX (FR); BROCHOT, Benjamin, 59000 LILLE (FR); PEYNOT, Jane, 59000 LILLE (FR)
(74) Mandataire: Cabinet Nuss

(57) **Abrégé**

L'invention concerne une pièce (1) de panneau de garniture pour habitacle de véhicule, comprenant :
- une couche support (2) rigide, cette couche support (2) comprenant majoritairement au moins un thermoplastique, notamment de type polypropylène,
- une couche de revêtement (3), de type textile non-tissé, superposée, directement ou indirectement, sur la couche support (2), cette couche de revêtement (3) comprenant au moins un mélange de fibres thermoplastiques, de type polypropylène ou polyester, et de fibres de textiles, selon une composition physicochimique différente de celle de la couche support (2).

## Description

La présente invention se rapporte au domaine des panneaux de garniture pour habitacle de véhicule et plus particulièrement au domaine des panneaux de garniture à impact carbone réduit.

Dans le cadre des problématiques écologiques actuelles, l'importance des enjeux environnementaux contraint les industriels à diminuer l'empreinte carbone des produits manufacturés. L'industrie automobile qui, jusqu'à présent, était intimement liée aux énergies fossiles et à l'industrie pétrochimique, se trouve forcée à considérer son impact sur l'environnement. Cette appréhension du facteur environnemental dans la conception des produits de l'industrie automobile a ainsi vocation à réduire les émissions de CO₂ dans le cadre de la production de pièces de véhicules.

Les panneaux de garnitures pour habitacle qui s'inscrivent également parmi les produits de l'industrie automobile ne font pas exception à ce souci d'optimisation de la réduction de l'empreinte carbone. C'est ainsi que des solutions ont été développées reposant sur une substitution de matériaux par utilisation de matériaux recyclés en vue d'une diminution de l'empreinte carbone des pièces de véhicule produites. Cependant, l'intégration de matériaux recyclés dans des pièces de véhicules se trouve confrontée, en premier lieu, aux exigences de sécurités définies par les normes en vigueur dans le domaine, mais également, notamment pour des pièces telles que celles participant à la garniture d'habitacle de véhicule, à des contraintes esthétiques qui répondent, d'une part, aux exigences de tenue des cahiers des charges des constructeurs et, d'autre part, à des impératifs commerciaux. Ainsi, toutes les pièces de véhicules ne permettent pas ou n'autorisent que difficilement, sinon de façon marginale, cette incorporation de matériaux recyclés, notamment dans le cadre d'une incorporation visuelle directe.

La présente invention a pour but de pallier ces inconvénients en proposant un élément de panneau de garniture pour habitacle de véhicule qui autorise l'intégration d'au moins un matériau recyclé et dont l'intégration dans un véhicule permet de conserver, d'une part, des qualités de performances mécaniques d'utilisation et de sécurité tout en permettant de répondre à d'éventuelles exigences esthétiques.

L'invention se rapporte à une pièce de panneau de garniture pour habitacle de véhicule, caractérisé en ce que cette pièce comprend :
- une couche support rigide, cette couche support comprenant majoritairement au moins un thermoplastique, notamment de type polypropylène,
- une couche de revêtement, de type textile non-tissé, superposée, directement ou indirectement, sur la couche support, cette couche de revêtement comprenant au moins un mélange de fibres thermoplastiques, de type polypropylène ou polyester, et de fibres de textiles, selon une composition physicochimique différente de celle de la couche support.

L'invention porte également sur un procédé de fabrication d'une pièce de panneau de garniture pour habitacle de véhicule selon l'invention, caractérisé en ce que le procédé comprend au moins :
- une phase de préparation de la couche de revêtement, cette préparation comprenant au moins :
   - une étape de collecte et de sélection de textiles destinés à être recyclés,
   - une étape de regroupement de ces textiles en fonction d'au moins une de leurs nuances ou de leurs couleurs,
   - une étape d'effilochage des fibres de chacun des groupes de textiles sélectionnés,
   - une étape de mélange des fibres de textiles avec des fibres thermoplastiques, tel que du polypropylène,
   - une étape de liage du mélange de fibres cardées de façon à obtenir un matériau de type textile non-tissé,
   - une étape de découpe du matériau aux dimensions désirées de façon à réaliser au moins une partie de la couche de revêtement de la pièce de panneau de garniture,
- une phase d'assemblage et de fixation de la couche support avec la couche de revêtement.

L'invention sera mieux comprise, grâce à la description ci-après, qui se rapporte aux modes de réalisation préférés, donnés à titre d'exemples non limitatifs, et expliqués avec référence aux dessins schématiques annexés, dans lesquels :

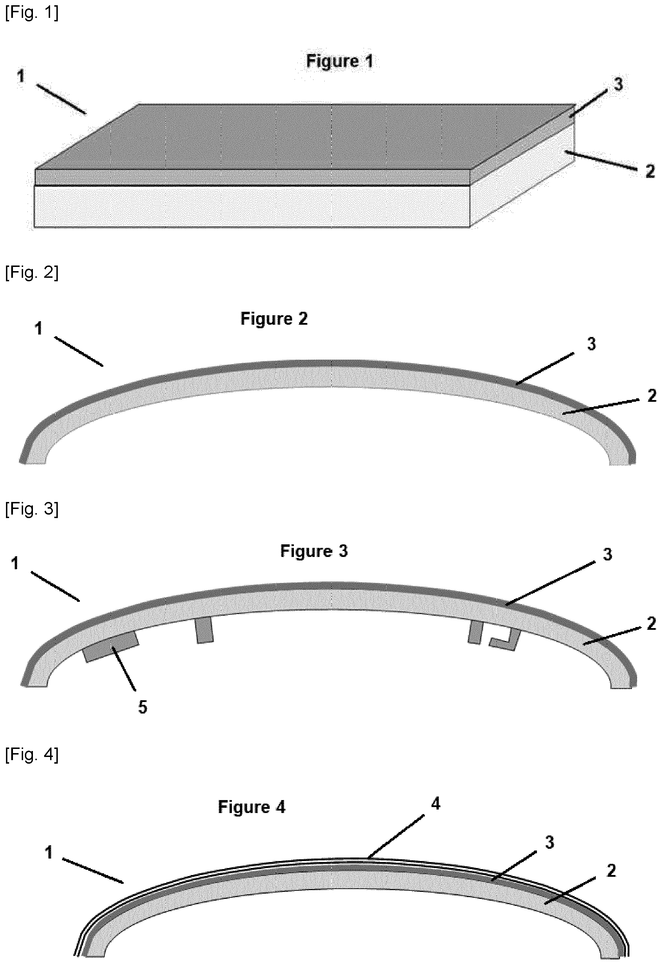

[Fig. 1] représente une vue du dessus et en coupe d'un exemple de pièce de panneau de garniture de l'invention,
[Fig. 2] représente une vue en coupe de face d'une pièce de panneau de garniture de la figure 1,
[Fig. 3] représente une vue en coupe de face d'un exemple de pièce de panneau de garniture intégrant des éléments supplémentaires,
[Fig. 4] représente une vue en coupe de face d'un exemple de pièce de panneau de garniture intégrant une couche de protection,

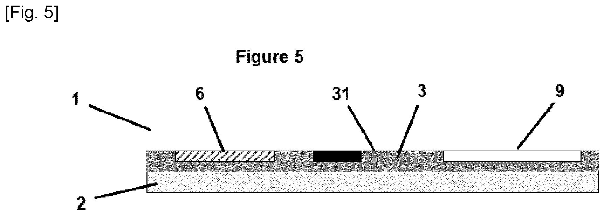

[Fig.5] représente une vue en coupe de face d'un exemple de pièce de panneau de garniture intégrant des éléments insérés dans la couche de revêtement.

Dans le cadre du présent document, le terme « fibre naturelle » désigne un composé qui présente structurellement la forme d'une fibre, c'est-à-dire d'un élément allongé, et dont l'origine est naturelle, c'est-à-dire issue d'un élément naturel. A titre d'exemple, les fibres naturelles désignent les fibres d'origine végétale, tels que les fibres de coton, de lin, de chanvre, de sisal, de jute, de kénaf ou de coco.

Dans le cadre du présent document, le terme « fibre thermoplastique » désigne un composé, dont la matière est d'origine synthétique notamment plastique, qui présente structurellement la forme d'une fibre, et possède comme propriété une perte de rigidité sous l'effet de la chaleur et un durcissement lors de son refroidissement.

Dans le cadre du présent document, le terme « fibres de textiles » désigne toutes les fibres issues d'au moins un textile, quel que soit sa nature et/ou son origine.

La présente invention se rapporte à une pièce de panneau de garniture 1 pour habitacle de véhicule, comprenant :
- une couche support 2 rigide, cette couche support 2 comprenant majoritairement au moins un thermoplastique, notamment de type polypropylène,
- une couche de revêtement 3, de type textile non-tissé, superposée, directement ou indirectement, sur la couche support 2, cette couche de revêtement 3 comprenant au moins un mélange de fibres thermoplastiques, de type polypropylène ou polyester, et de fibres de textiles, selon une composition physicochimique différente de celle de la couche support 2.

Il convient de noter que la pièce 1 de panneau de garniture pour habitacle de véhicule selon l'invention est susceptible d'être intégrée dans tout type de véhicule, notamment dans des véhicules terrestres tels que des automobiles, des camions, des véhicules utilitaires ou de chantier, mais encore à l'intérieur de véhicules aériens ou maritimes, en particulier s'ils sont susceptibles de transporter un ou plusieurs passagers. A titre d'exemple, la pièce 1 de panneau de garniture pour habitacle se rapporte à un tableau de bord, un panneau de porte ou une console, voire également une garniture de plafonnier, une tablette ou un encadrement de pare-brise ou de vitre du véhicule.

La pièce 1 de panneau de garniture selon l'invention fait ainsi intervenir une superposition de couches 2, 3 dans lesquelles les fonctions respectives de support et de revêtement sont assurées. Ainsi la pièce de panneau de garniture 1 est en mesure de répondre à un usage de cette pièce 1 de panneau de garniture dans un habitacle de véhicule, tout en permettant une conception de couche utilisant des matériaux issus du recyclage, de sorte à réduire l'empreinte carbone de fabrication de la pièce 1. Par ailleurs, compte tenu de leurs compositions respectives, les couches de support 2 et de revêtement 3 de la pièce 1 de panneau de garniture en combinaison, sont en mesure de répondre aux exigences de sécurités et de contraintes esthétiques.

Dans le cadre de l'invention, la couche support 2 et la couche de revêtement 3 sont susceptible d'être réalisées à partir de « textile non tissé », c'est-à-dire par exemple sous la forme d'un amas de fibre, mélangées et assemblées de manière mécanique, thermique ou chimique sans qu'il y ait constitution d'un fil que l'on structure par une étape de tissage ou tricotage. L'utilisation d'un tel matériau présente comme avantage d'apporter, d'une part, une conception et, d'autre part, une production qui sont simplifiées par rapport à des équivalents à partir de textile tissé.

Grâce aux propriétés susmentionnées des fibres thermoplastiques, celles-ci présentent comme avantage d'être facilement utilisées comme matrice ou liant dans le cadre d'un procédé faisant intervenir des opérations de chauffe avec une variation de température ou encore des opérations de compression. Ces opérations de chauffe permettent notamment de rendre malléable le matériau thermoplastique dans le cadre de la production de la pièce de panneau de garniture 1 en réalisant un chauffage à une température supérieure à la température de ramollissement des fibres thermoplastiques.

Dans la présente invention, les fibres thermoplastiques sont préférentiellement en résines synthétiques, notamment des composés utilisés dans la fabrication de matière plastique. De façon préférée, afin d'opérer une optimisation de la réduction de l'empreinte carbone dans le cadre de la production de véhicules, les fibres thermoplastiques utilisées sont issues d'une filière de recyclage des matières plastiques. Cette optimisation est d'autant plus atteinte que, compte tenu de leurs propriétés de « thermoplasticité réversible » liée à la chaleur, ces fibres thermoplastiques sont recyclables à l'infini.

Selon un exemple préféré de mise en oeuvre de l'invention, les fibres thermoplastiques de la couche support 2 sont des composés de polypropylène. Ces composés répondent de façon optimale à un compromis de performances mécaniques, de facilité de production et de coûts, tout en s'inscrivant dans le cahier des charges imposées aux véhicules.

Selon un exemple de réalisation se rapportant à une variante de construction de la couche support 2, cette couche 2 est réalisé par un mélange de fibres naturelles avec des fibres thermoplastiques d'un ou de plusieurs types tels que polypropylène ou polyester.

Selon un autre exemple préféré de mise en oeuvre de l'invention susceptible d'être combiné avec l'exemple précédent, les fibres thermoplastiques pour la couche de revêtement 3 sont entre autres à base de polypropylène ou, de façon alternative, à base de polyester.

Afin de répondre aux exigences industrielles de production de la pièce 1 de panneau de garniture à impact de carbone réduit, ainsi qu'aux attentes des usagers, tout en garantissant leur sécurité, la couche de revêtement 3 présente une composition physico-chimique différente de la couche support 2. Ceci résulte du rôle structurel et fonctionnel que joue chacune de ces deux couches 2, 3 dans la pièce 1 de panneau de garniture. En effet, la couche support 2 a pour rôle de supporter la couche de revêtement 3, tandis que la couche de revêtement 3 a pour rôle de définir l'aspect esthétique de la pièce 1 afin de répondre aux attentes des utilisateurs. Une composition physicochimique différente permet à chaque couche de remplir son rôle, sans contrevenir aux impératifs structurels et aux propriété physico-chimiques auxquels doit répondre la pièce 1 de panneau de garniture.

Selon un exemple de construction se rapportant à une variante de réalisation de la pièce 1 de panneau de garniture de l'invention, cette pièce 1 comprend une ou plusieurs couches supplémentaires entre la couche support 2 et la couche de revêtement 3. A titre d'exemple, cette couche supplémentaire est susceptible de correspondre à une couche de renfort, une couche d'isolation phonique ou encore d'isolation thermique, voire également d'une couche de confort ou d'une interface de liaison. Les couches de revêtement 3 et de support 2 se trouvent alors indirectement superposées entre elles.

Dans le cadre de l'invention, la couche support 2 présente des propriétés mécaniques de rigidité supérieures à celles de la couche de revêtement 3. Dans ces conditions, la couche support 2 remplit son rôle de support en apportant une rigidité structurelle à la pièce 1 de panneau de garniture de l'invention sans que cela n'altère ou n'impacte les propriétés techniques spécifiques propres à la couche de revêtement 3.

Selon un exemple de réalisation se rapportant à une variante de construction de la pièce 1 de panneau de garniture de l'invention, les fibres de textiles de la couche de revêtement 3 sont des fibres, d'origine naturelles ou synthétiques, tels que des fibres de polyéthylène, de polyester, de lin, de chanvre, de kenaf, de myscanthus, de laine, d'élasthanne, de coton, de polyamide. De façon préférée, afin d'opérer une optimisation de la réduction de l'empreinte carbone dans le cadre de la production de véhicules, les fibres de textiles de la couche de revêtement 3 sont des fibres recyclées issues de textiles, tel que à titre d'exemple des vêtements en fin de vie, des vêtements non commercialisables pour défaut de réalisation, ou encore des déchets textiles de l'industrie textile de type chute de tissus.

Selon un exemple de réalisation se rapportant à une autre variante de construction de l'invention et susceptible d'être combinée avec la variante précédemment détaillée, la couche de revêtement 3 comprend des fibres de textiles dans une proportion comprise entre 50% et 80% de la masse totale de la couche de revêtement 3. Dans le cas où les fibres de textiles sont issues d'une filière de recyclage, la couche de revêtement 3 comportera entre 50% et 80% de composés recyclés.

Selon un exemple de réalisation se rapportant à une variante complémentaire spécifique de la variante précédemment détaillée, la couche de revêtement 3 comprend également des fibres thermoplastiques, réalisées notamment à partir de résine, dans une proportion comprise entre 20% et 50%.

Selon un exemple de réalisation se rapportant à une autre variante de construction de l'invention, la couche de revêtement 3 est uniquement constituée d'un mélange de fibres thermoplastiques, réalisées notamment à partir de résine, et de fibres de textiles susceptibles de provenir notamment d'une filière de recyclage de textiles. Dans une telle variante de construction, la couche de revêtement 3 se trouve intégralement constituée de matériaux issus d'une filière de recyclage de sorte que l'impact carbone de production de la pièce 1 de panneau de garniture de l'invention s'en trouve réduit.

Selon un exemple de réalisation se rapportant à une autre variante de construction de l'invention et susceptible d'être combinée avec les autres variantes précédemment détaillées, les fibres de textiles de la couche de revêtement 3 présentent une longueur moyenne comprise entre 10 et 30 millimètres, préférentiellement comprise entre 15 et 20 millimètres. De telles longueurs des fibres de textiles présentent comme avantage de pouvoir être facilement utilisées dans le cadre d'une opération d'aiguilletage. Lorsque la longueur des fibres est moins importante, celles-ci sont alors susceptibles d'être utilisées dans le cadre d'autre processus de traitement notamment lorsque la technologie AIRLAID est mise en oeuvre.

Selon un exemple de réalisation se rapportant à une autre variante de construction de l'invention et susceptible d'être combinée avec les autres variantes précédemment détaillées, la couche de revêtement 3 comprend une surface extérieure 31, opposée à la surface en vis-à-vis de la couche support 2, qui comporte au moins un relief et/ou présente un arrangement non lisse 8. Un arrangement non lisse correspondant notamment à un relief de surface qui ne serait pas en mesure d'être observé visuellement mais serait susceptible d'être identifiable au contact de la surface extérieure 31, de façon à ressentir tactilement, par exemple, une granulosité ou une rugosité de cette surface 31.

Selon un exemple de réalisation, la couche de revêtement 3 est susceptible de présenter un relief sur sa surface extérieure 31 visible par les usagers de la pièce 1 de panneau de garniture, obtenu par exemple par embossage ou par grainage et contribuant à créer l'aspect esthétique de la pièce 1 de panneau de garniture. Selon un autre exemple de réalisation, la couche de revêtement 3 est susceptible de présenter un arrangement non lisse sur sa surface extérieure 31, visible par les usagers de la pièce 1 de panneau de garniture, par exemple sous la forme d'un grain de surface. Ainsi, la pièce 1 de panneau de garniture selon l'invention est susceptible de présenter une couche de revêtement 3 qui combine un aspect esthétique, avec des reliefs et/ou un arrangement non lisse, grâce à une conception éco-responsable à faible impact carbone faisant intervenir une fabrication, partielle ou intégrale, avec des fibres de textiles issues d'une filière de recyclage.

Selon un exemple de réalisation se rapportant à une autre variante de construction de l'invention et susceptible d'être combiné avec les autres variantes précédemment détaillées, la couche de revêtement 3 présente une combinaison de fibres, d'au moins deux couleurs différentes, arrangées entre elles selon au moins une distribution réalisant au moins un aspect visuel au niveau de la surface extérieure 31, c'est à dire opposée à la surface de la couche de revêtement 3 disposée en vis-à-vis de la couche support 2. Selon cette variante, la couche de revêtement 3 peut par exemple présenter une surface extérieure 31 avec un patchwork de couleur ou encore des dessins ou logo de couleur.

Selon un exemple de réalisation, la couche de revêtement 3 présente par exemple des intégrations/encapsulation d'éléments additionnels 9 tels qu'un insert 6, de façon à obtenir un motif visuel particulier au niveau de la surface extérieure 31 visible par les usagers. A titre d'exemple, ces éléments additionnels 9 peuvent être issus de films, de textiles, de feutres découpés ou autres et sont intégrés, notamment par une opération de surmoulage, sur la couche de revêtement 3 de façon à réaliser un motif visuel au niveau de la surface extérieure 31.

Selon un exemple de réalisation se rapportant à une autre variante de construction de l'invention et susceptible d'être combinée avec les autres variantes précédemment détaillées, la pièce 1 de panneau de garniture comprend également une couche de protection 4 positionnée sur au moins une partie de la surface extérieure 31 de la couche de revêtement 3, c'est à dire opposée à la surface de la couche de revêtement disposée en vis-à-vis de la couche support 2, cette couche de protection 4 étant susceptible d'être de type vernis, laque ou film transparent. Une telle couche de protection 4 permet d'optimiser le maintien du rendu au cours du temps de la surface extérieure 31 de la couche de revêtement 3 en la protégeant notamment contre des risques de dommage liés à son usage. Cette couche de protection 4 est également susceptible de compléter l'aspect visuel de la surface extérieure 31 en fonction de son aspect propre, de sorte que les propriétés d'aspect ou de couleur spécifiques à cette couche de protection 4 sont en mesure d'être combinés avec les propriétés intrinsèques de la surface extérieure 31 de façon à opérer un modification visuelle de l'aspect de la couche de revêtement 3. Selon un exemple, cette couche de protection 4 est susceptible de conférer une teinte particulière ou encore un aspect brillant à au moins une partie de cette surface extérieure 31 de la couche de revêtement 3 permettant d'apporter un motif supplémentaire de décoration ou de texture.

La pièce 1 de panneau de garniture, selon l'une ou l'autre des différentes variantes de l'invention, permet donc avantageusement l'intégration d'au moins un matériau issu d'une filière de recyclage dans au moins une de ces couches structurelle 2, 3 de façon à opérer une diminution de l'empreinte carbone qui résulte de sa production. Conjointement à cet intérêt environnemental, la pièce 1 de panneau de garniture selon l'invention présente des propriétés physico-chimiques, notamment structurelles et mécaniques, en mesure de répondre aux exigences de normes de sécurités indispensables à une application et une utilisation dans un habitacle de véhicule, tout en répondant sans léser les attentes esthétiques des utilisateurs.

L'invention porte également sur un procédé de fabrication d'une pièce 1 de panneau de garniture pour habitacle de véhicule selon l'invention, ce procédé comprend au moins :
- une phase de préparation de la couche de revêtement 3, cette préparation comprenant au moins :
   - une étape de collecte et de sélection de textiles destinés à être recyclés,
   - une étape de regroupement de ces textiles en fonction d'au moins une de leurs nuances ou de leurs couleurs,
   - une étape d'effilochage des fibres de chacun des groupes de textiles sélectionnés,
   - une étape de mélange des fibres de textiles avec des fibres thermoplastiques, tel que du polypropylène,
   - une étape de liage du mélange de fibres cardées de façon à obtenir un matériau de type textile non-tissé,
   - une étape de découpe du matériau aux dimensions désirées de façon à réaliser au moins une partie de la couche de revêtement 3 de la pièce 1 de panneau de garniture,
- une phase d'assemblage et de fixation de la couche support 2 avec la couche de revêtement 3.

Selon un mode de réalisation particulier de la phase de préparation de la couche de revêtement 3, l'étape de sélection des textiles destinés à être recyclés est susceptible d'être appliquée au niveau de textiles se rapportant à des tissus défectueux, ou en fin de vie tels que des vêtements, draps, tentures, etc... ou encore de déchets provenant de l'industrie textile. Selon un exemple préféré de mise en oeuvre, la sélection se fera en fonction de la nature, de l'origine et du type de textiles. Ainsi, la sélection est susceptible d'être opérée en fonction de la nature du textile, en séparant par exemple les jeans, des velours, mais également en fonction de l'origine du textile en séparant par exemple les textiles synthétiques tels que les élasthannes, les viscoses, des textiles 100% naturel tels que les cotons, les laines ou les soies, ou encore en fonction du type de textile en séparant les vêtements, les déchets ou rebus de l'industrie textile. La phase de préparation de la couche de revêtement 3 selon le procédé de l'invention repose ainsi sur une sélection puis une intégration de textiles destinés au recyclage de façon à obtenir, outre une diminution des coûts de production, une réduction des ressources utilisées et donc de l'empreinte carbone.

L'étape de sélection de textiles permet de sélectionner, au moins grossièrement, les textiles qui serviront de base pour la préparation de la couche de revêtement afin d'élaborer ses propriétés physico-chimiques, son aspect et son esthétique finals pour que la pièce 1 de panneau de garniture réponde aux exigences d'usage en assurant la sécurité des utilisateurs.

L'étape de regroupement des textiles par nuance ou couleurs permet avantageusement l'élaboration tinctoriale de la couche de revêtement 3 définissant la couleur finale visible par les usagers.

L'étape d'effilochage permet d'opérer une modification structurelle des groupes de textiles sélectionnés sous la forme d'un ensemble de fibres mélangées. Selon un mode de réalisation préféré, les fibres issues de l'étape d'effilochage présentent une longueur moyenne comprise entre 10 et 30 millimètres, de préférence entre 15 et 20 millimètres, de façon à pouvoir être facilement utilisées dans le cadre d'une opération d'aiguilletage. Selon un mode de réalisation préféré, les fibres thermoplastiques d'un tel mélange consistent essentiellement en du polypropylène ou du polyester. Selon un exemple de réalisation d'un tel mélange, le mélange de fibres comprend entre 50% et 80% de fibres textiles et entre 20% et 50% de fibres thermoplastiques. De préférence, là encore, un tel mélange comprend, d'une part, de l'ordre de 70% de fibre textiles, notamment issues d'une filière de recyclage et, d'autre part, de l'ordre de 30% de fibres thermoplastiques, notamment de type polypropylène.

Selon un autre exemple de réalisation du procédé de l'invention, l'étape de mélange est appliquée à différents types de fibres de textiles impliquant des fibres thermoplastiques, mais également avec d'autres catégories de fibres, tels que des fibres de renfort, de type fibre de verre, fibre de carbone, fibre de chanvre, fibre de lin, fibre de kénaf ou fibre de sisal. La présence de telles fibres de renfort permet de rigidifier et de garantir une cohésion structurelle de la pièce 1 de panneau de garniture obtenue par le procédé de l'invention.

Selon un autre exemple de réalisation du procédé de l'invention, celui-ci comprend, préalablement à l'étape de liage, une étape de cardage du mélange de fibres avec pour objectif de démêler, peigner et orienter les différentes fibres du mélange de façon, par la suite, à favoriser leur liage pour obtenir un matériau de type textile non-tissé.

Concernant plus particulièrement l'étape de liage, celle-ci est susceptible d'être réalisée par friction, cohésion ou adhésion des fibres du mélange. Selon un mode de réalisation préféré, l'étape de liage fait intervenir la technologie AIRLAID dit de « flux d'air » qui consiste en un procédé aérodynamique véhiculant et dispersant les fibres du mélange dans un flux d'air de façon à les lier entre elles par aiguilletage, jet d'eau, liage chimique ou par fusion notamment thermique, afin de former le matériau de type textile non tissé. L'étape de liage permet ainsi l'obtention d'un matériau textile non tissé de masse surfacique comprise entre 200 et 400 g/m². Un matériau textile avec une masse surface de cet ordre de grandeur correspond à un compromis intéressant pour obtenir une couverture optimale de la couche de revêtement 3.

Concernant plus particulièrement l'étape de découpe, celle-ci a pour objectif d'ajuster la couche de revêtement 3 produite aux dimensions requises pour la production d'une pièce 1 de panneau de garniture selon l'invention.

Concernant plus particulièrement la phase d'assemblage et de fixation de la couche support 2 avec la couche de revêtement 3, celle-ci a pour objectif de réunir ces deux couches 2, 3 et de les maintenir associées entre elles dans le cadre de la production d'une pièce 1 finale de panneau de garniture selon l'invention. Selon un exemple préféré de construction, la pièce 1 finale de panneau de garniture présente avantageusement une épaisseur totale comprise entre 1,4 et 3 millimètres.

Selon un exemple se rapportant à une première variante de réalisation de la phase d'assemblage de la couche de revêtement 3 sur la couche support 2, cette phase fait intervenir :
- une étape de positionnement de la couche de revêtement 3 dans un moule,
- une opération de thermocompression.
Lors de l'étape de positionnement, la couche de revêtement 3 est positionnée contre la couche support 2. Lors de l'opération de thermocompression, la matière thermoplastique est fondue, notamment par chauffage à près de 200°C, puis l'ensemble malléable des deux couches 2, 3 superposées est formé par compression avant d'être refroidi à température ambiante. De façon alternative, la couche support 2 chauffé préalablement au positionnement de la couche de revêtement 3 et à l'étape de formage dans le cadre de l'opération de thermocompression.

Selon un exemple de mise en oeuvre spécifique de cette première variante de réalisation, la surface du moule en contact avec la couche de revêtement 3 présente un relief avec un motif ou un grain de surface. Ce motif permet alors, au cours de l'opération de thermocompression, de réaliser au moins un relief et /ou arrangement non lisse visible sur la surface extérieure 31 de la couche de revêtement 3. A titre complémentaire, en vue de la mise en oeuvre d'une opération de thermocompression, l'étape de mélange préalable est susceptible d'être appliquée à des fibres de textiles, des fibres thermoplastiques et des fibres de renforts de sorte que ces fibres de renforts augmentent les propriétés de résistance mécanique de la pièce 1 de panneau de garniture.

Selon un autre exemple complémentaire de mise en oeuvre spécifique de cette première variante, l'opération de thermocompression dans le moule fait intervenir une compression de l'ordre de 10 bars sous une température de l'ordre de 200°C. Un tel exemple non-limitatif de mise en oeuvre permet de réaliser sans difficulté un démoulage ultérieur de la pièce 1 de panneau de garniture.

Selon un exemple de réalisation du procédé de l'invention se rattachant à une variante spécifique de la première variante de réalisation de la phase d'assemblage de la couche de revêtement 3 sur la couche support 2, le procédé de l'invention comprend en outre une opération de surmoulage d'au moins un élément supplémentaire 5 par injection, cet élément supplémentaire 5 étant susceptible d'être un index, un moyen de fixation, un clip, ou encore une nervure. De façon préférentielle, les éléments supplémentaires 5 sont positionnés sur la face opposée à la couche support 2. De plus, de façon complémentaire, ces éléments supplémentaires 5 sont réalisés en résine thermoplastique injectée, tel que du polypropylène.

Selon un exemple de réalisation se rapportant à une deuxième variante de réalisation de la phase d'assemblage de la couche de revêtement 3 sur la couche support 2, celle-ci fait intervenir au moins une opération d'injection de matière. Cette injection est préférentiellement opérée sur la face opposée à la couche support 2

Selon un exemple de mise en oeuvre préférée de cette deuxième variante de réalisation de la phase d'assemblage, l'opération d'injection de matière est réalisée dans un moule susceptible de présenter un relief et/ou un arrangement non lisse, pour interagir avec une matière injectée à base de résine thermoplastique notamment de type polypropylène.

Selon un exemple se rapportant à une autre variante du procédé de fabrication de l'invention, susceptible d'être combinée avec les autres variantes précédemment détaillées, la phase d'assemblage de la couche de revêtement 3 sur la couche support 2 fait intervenir au moins une opération de collage et/ou de gainage par l'intermédiaire d'au moins un matériau adhésif et/ou d'une colle. Suite à la mise en oeuvre de cette variante, après assemblage, la pièce 1 de panneau de garniture comprend au moins une couche intermédiaire d'adhésive ou de colle disposée entre la couche support 2 et la couche de revêtement 3. A titre préférentiel, le matériau adhésif ou colle sélectionné pour cette opération est de type polyuréthane, polyamide ou polyester.

Selon un exemple de réalisation se rapportant à une troisième variante de réalisation de la phase d'assemblage de la couche de revêtement 3 sur la couche support 2, celle-ci fait intervenir au moins :
- une étape de positionnement de la couche de revêtement 3 dans un moule,
- une étape d'injection dans le moule du matériau destiné à former la couche support 2 de façon à opérer un surmoulage de la couche de revêtement 3 par la couche support 2.

Selon un exemple de réalisation se rapportant à une autre variante de réalisation du procédé de fabrication de l'invention, susceptible d'être combinée avec les différentes variantes précédemment détaillées, le procédé comprend en outre une étape de positionnement et de fixation d'une couche de protection 4 sur au moins une partie de la surface extérieure 31 de la couche de revêtement 3, c'est à dire opposée à la surface de la couche de revêtement 3 disposée en vis-à-vis de la couche support 2. Selon une mise en oeuvre préférée de cette étape de positionnement et de fixation, la couche de protection 4 est disposée de façon à recouvrir l'intégralité de la surface extérieure 31 de sorte que l'intégralité de la partie de la couche de revêtement 3 qui est visible par des usagers se trouve protégée. Selon un exemple spécifique de cette variante de réalisation, la couche de protection 4 est appliquée sur la surface extérieure 31 par pulvérisation à l'aide d'un spray, ou par utilisation d'un pinceau ou d'un rouleau. De façon préférée mais non limitative, la couche de protection 4 consiste en un vernis, une laque ou encore un film transparent de protection, protégeant l'aspect visuel et structurel de la surface extérieure 31 de la couche de revêtement 3 de la pièce 1 de panneau de garniture.

Dans le cadre d'une mise en oeuvre du procédé de l'invention comprenant une phase d'assemblage de la couche de revêtement 3 sur la couche support 2 faisant intervenir une opération de thermocompression selon la première variante de réalisation détaillée précédemment, lorsque la couche de protection 4 est réalisée par un film transparent de protection, le positionnement et la fixation de ce film transparent sur la couche de revêtement 3 sont susceptibles d'être effectués après l'opération de thermocompression, lorsque la surface extérieure 31 de la couche de revêtement 3 est encore chaude, notamment avec une température de l'ordre de 170°C à 200°C. Dans le cadre d'une telle mise en oeuvre, sous l'action de la chaleur résiduel résultant de l'opération de thermocompression, le film supporte une fusion de matière, au moins partielle, et adhère à la surface extérieure 31 de la couche de revêtement 3. Dans ces conditions, la mise en oeuvre du procédé est susceptible de s'affranchir d'une éventuelle étape de chauffage supplémentaire destinée à optimiser la fixation de la couche de protection 4 sur la couche de revêtement 3. L'empreinte carbone du procédé de fabrication selon l'invention s'en trouve réduite en conséquence.

En conséquence, la pièce 1 de panneau de garniture pour habitacle de véhicule et son procédé de fabrication selon l'invention permet d'avoir une production industrielle à impact carbone réduit grâce à l'intégration de matériaux provenant d'une filière de recyclage et ceci sans contrevenir aux normes de sécurités et propriétés physicochimiques imposées par la réglementation et sans léser l'esthétique attendue pour la pièce 1 de panneau de garniture.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Pièce (1) de panneau de garniture pour habitacle de véhicule, **caractérisée en ce que** cette pièce (1) comprend :
- une couche support (2) rigide, cette couche support (2) comprenant majoritairement au moins un thermoplastique, notamment de type polypropylène,
- une couche de revêtement (3), de type textile non-tissé, superposée, directement ou indirectement, sur la couche support (2), cette couche de revêtement (3) comprenant au moins un mélange de fibres thermoplastiques, de type polypropylène ou polyester, et de fibres de textiles, selon une composition physicochimique différente de celle de la couche support (2).

2. Pièce (1) selon une des revendications précédentes, **caractérisée en ce que** les fibres de textiles de la couche de revêtement (3) sont des fibres, d'origine naturelles ou synthétiques, tels que des fibres de polyéthylène, de polyester, de lin, de chanvre, de kenaf, de myscanthu, de laine, d'élasthanne, de coton, de polyamide.

3. Pièce (1) selon une des revendications précédentes, **caractérisée en ce que** la couche de revêtement (3) comprend des fibres de textiles dans une proportion comprise entre 50% et 80% de la masse totale de la couche de revêtement (3).

4. Pièce (1) selon une des revendications précédentes, **caractérisée en ce que** les fibres de textiles de la couche de revêtement (3) présentent une longueur moyenne comprise entre 10 et 30 millimètres, préférentiellement comprise entre 15 et 20 millimètres.

5. Pièce (1) selon une des revendications précédentes, **caractérisée** en en ce que la couche de revêtement (3) comprend une surface extérieure (31), opposée à la surface en vis-à-vis de la couche support (2), qui comporte au moins un relief et/ou présente un arrangement non lisse.

6. Pièce (1) selon une des revendications précédentes, **caractérisée en ce que** la couche de revêtement (3) présente une combinaison de fibres d'au moins deux couleurs différentes, arrangées entre elles selon au moins une distribution réalisant au moins un motif visuel au niveau de la surface extérieure (31), c'est à dire opposée à la surface de la couche de revêtement (3) disposée en vis-à-vis de la couche support (2)

7. Pièce (1) selon une des revendications précédentes, **caractérisée en ce qu'**elle comprend également une couche de protection (4) positionnée sur au moins une partie de la surface extérieure (31) de la couche de revêtement (3), c'est à dire opposée à la surface de la couche de revêtement disposée en vis-à-vis de la couche support (2), cette couche de protection (4) étant susceptible d'être de type vernis, laque ou film transparent.

8. Procédé de fabrication d'une pièce (1) de panneau de garniture pour habitacle de véhicule selon une des revendications 1 à 7, **caractérisé en ce que** le procédé comprend au moins :
- une phase de préparation de la couche de revêtement (3), cette préparation comprenant au moins :
- une étape de collecte et de sélection de textiles destinés à être recyclés,
- une étape de regroupement de ces textiles en fonction d'au moins une de leurs nuances ou de leurs couleurs,
- une étape d'effilochage des fibres de chacun des groupes de textiles sélectionnés,
- une étape de mélange des fibres de textiles avec des fibres thermoplastiques, tel que du polypropylène,
- une étape de liage du mélange de fibres cardées de façon à obtenir un matériau de type textile non-tissé,
- une étape de découpe du matériau aux dimensions désirées de façon à réaliser au moins une partie de la couche de revêtement (3) de la pièce (1),
- une phase d'assemblage et de fixation de la couche support (2) avec la couche de revêtement (3).

9. Procédé de fabrication selon la revendication 8, **caractérisé en ce que** la phase d'assemblage de la couche de revêtement (3) sur la couche support (2) fait intervenir :
- une étape de positionnement de la couche de revêtement (3) dans un moule,
- une opération de thermocompression.

10. Procédé de fabrication selon la revendication 9, **caractérisé en ce que** le procédé comprend en outre une opération de surmoulage d'au moins un élément supplémentaire (5) par injection, cet élément supplémentaire (5) étant susceptible d'être un index, un moyen de fixation, un clip, ou encore une nervure.

11. Procédé de fabrication selon la revendication 8, **caractérisé en ce que** la phase d'assemblage de la couche de revêtement (3) sur la couche support (2) fait intervenir au moins une opération d'injection de matière.

12. Procédé de fabrication selon une des revendications 8 à 11, **caractérisé en ce que** la phase d'assemblage de la couche de revêtement (3) sur la couche support (2) fait intervenir au moins une opération de collage et/ou de gainage par l'intermédiaire d'au moins un matériau adhésif et/ou d'une colle.

13. Procédé de fabrication selon la revendication 8, **caractérisé en ce que** la phase d'assemblage de la couche de revêtement (3) sur la couche support (2) fait intervenir au moins :
- une étape de positionnement de la couche de revêtement (3) dans un moule,
- une étape d'injection dans le moule du matériau destiné à former la couche support (2) de façon à opérer un surmoulage de la couche de revêtement (3) par la couche support (2).

14. Procédé de fabrication selon une des revendications 8 à 13, **caractérisé en ce que** le procédé comprend en outre une étape de positionnement et de fixation d'une couche de protection (4) sur au moins une partie de la surface extérieure (31) de la couche de revêtement (3), c'est à dire opposée à la surface de la couche de revêtement (3) disposée en vis-à-vis de la couche support (2).
